(19)

**Europäisches Patentamt**
**European Patent Office**
**Office européen des brevets**

(11)  **EP 3 866 521 A1**

(12)  # EUROPEAN PATENT APPLICATION

(43) Date of publication:
**18.08.2021 Bulletin 2021/33**

(51) Int Cl.:
*H04W 56/00* (2009.01)      *H04B 7/185* (2006.01)

(21) Application number: **20305148.7**

(22) Date of filing: **17.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **Mitsubishi Electric Corporation
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **CIOCHINA, Cristina**
35708 Rennes Cedex 7 (FR)
• **BONNEVILLE, Hervé**
35708 Rennes Cedex 7 (FR)
• **GRESSET, Nicolas**
35708 Rennes Cedex 7 (FR)

(74) Representative: **Plasseraud IP
66, rue de la Chaussée d'Antin
75440 Paris Cedex 09 (FR)**

(54)  **HANDOVER-RELATED RACH REQUESTS REDUCTION IN NON-TERRESTRIAL NETWORKS**

(57)   The present invention relates to a method implemented by a user equipment for performing a handover between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining a value to be used as a timing advance in the second cell, the value to be used as a timing advance in the second cell being determined based on:

- a data related to timing advance of the user equipment in the second cell received from the first base station or from a base station to which the user equipment has been connected before being connected to the first base station, or

- a value used as a timing advance in the first cell when no data related to timing advance of the user equipment in the second cell is received from the first base station or from a base station to which the user equipment has been connected before being connected to the first base station ;

performing an uplink transmission with the second base station using the value to be used as a timing advance in the second cell.

FIG. 6

EP 3 866 521 A1

**Description**

The present invention generally relates to the domain of telecommunication system, and more specifically to satellite communication systems.

In satellite communication networks with non-geostationary orbit satellites, the satellites are in constant movement. The user equipments (UEs) in such communication network are often performing handovers to stay connected to the network via the next satellite beam that covers their geographical area. These handovers require an important amount of signaling involving consuming radio resources.

The quantity of signaling is increased by the fact that the satellite beams often cover a large geographical area and that the relative terrestrial speed of these satellites is very important. Indeed, in this context the number of UEs covered by one beam can be very important and the time during which each of these UEs is under cover of the same satellite beam is very short, therefore, a lot of UEs may perform handovers in a very short time.

Another problem relates to the fact that in such satellite communication networks long Round Trip Time (RTT) exists between the UEs and the base stations. Therefore, since during a hand-over, the target cell (target base station) pre-allocates radio resources to the UE, so as the UE can access the target cell more quickly compared to an initial access, such long RTT requires the target cell to pre-allocate more radio resources for the hand-over (HO) to the UEs to avoid interferences. In addition, long Round Trip Time (RTT) also increase the signaling required during the handover.

The present invention aims at improving the situation.

To that end, the invention relates to a method implemented by a user equipment for performing a handover between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining a value to be used as a timing advance in the second cell, the value to be used as a timing advance in the second cell being determined based on:

- a data related to timing advance of the user equipment in the second cell received from the first base station or from a base station to which the user equipment has been connected before being connected to the first base station, or
- a value used as a timing advance in the first cell when no data related to timing advance of the user equipment in the second cell is received from the first base station or from a base station to which the user equipment has been connected before being connected to the first base station ;

performing an uplink transmission with the second base station using the value to be used as a timing advance in the second cell.

Therefore, to perform an uplink communication between the user equipment and the second base station, that is, the base station to which the user equipment connects to after handover, it is no longer necessary that the user equipment receives from the second base station (which usually estimates the timing advance and sends it to the UE during the handover) timing advance. Therefore, less signaling and less computing are required during the handover. In addition, such procedure does not require a user equipment able to localize itself (for example, using a global navigation satellite system) or a user equipment with important computing ability.

The user equipment can perform a handover which requires less computing and at least less signaling than a classical hand-over procedure. Indeed, during a classical hand-over procedure the second base station (second cell or target cell) estimates the value to be used as a timing advance (TA) of the user equipment in the second cell based on signals sent by the user equipment to the second base station. For example, in wireless communication standard such as LTE, Advanced LTE or New Radio, the estimation of the TA is performed based on the first message (Msg1 of the RACH procedure) of the RACH procedure received by the base station from the user equipment. Later in the same RACH procedure, the value of the TA estimated by the base station is transmitted (Msg2 of the RACH procedure) to the UE which uses it to introduce a time delay when emitting signals through the second cell.

Therefore, the invention enables to reduce the computing and signaling during the handover which for example in the context of most wireless standard (for example, LTE, Advanced LTE or New Radio) may enable to remove one message during the handover procedure (for example the RACH preamble or the second message (Msg2) sent by the second base station during the RACH procedure, and/or in some cases skip the RACH procedure altogether). Removing those messages enables to reduce the handover latency. In addition, removing those messages (or at least applying a timing advance offset while sending those messages) also enables to release important amount of radio resources, since the exchanges performed between the second base station and the user equipment during the handover procedure when the user equipment (and eventually the second base station) does not yet implement a time offset based on the timing advance value (to compensate the time required for the signal to propagate) require the second base station to reserve much more radio resources than classical exchange. Indeed, the second base station cannot (or only poorly) predict the time of reception of these exchanges, therefore to avoid interferences with other transmissions (and thus to reduce the number of unsuccessful access procedures) the second base station must reserve important radio resources to take into account possible delays due to signal propagation. Therefore, determining by the user equipment the value to be used as a timing advance in the second cell before performing a handover procedure and while the user equipment is connected to a base station (that is, the first base station or a base station to which the user equipment was connected before being connected to the first base station) is less radio resource consuming.

The uplink transmission performed with the second base station using the value to be used as a timing advance in the second cell may either be an uplink transmission performed during the handover procedure (for example, Msg1 or Msg3 of the 4-step RACH procedure, or an uplink message during a modified RACH procedure) or after the handover procedure (for example, the first uplink transmission performed after the handover) or even the first uplink transmission performed with the second base station when, for example, no RACH procedure is required during handover.

The method may therefore further comprise performing a handover procedure. Such handover may be performed without transmitting through the second cell (target cell) data relating to a value to be used as a timing advance of the user equipment in the second cell. The uplink transmission performed may be performed as part of the handover procedure. However, the uplink transmission performed may also be performed out of the frame of the handover procedure, for example after or before a handover procedure.

That is, the user equipment is able to connect to the second cell without receiving through the second cell data relating to a value to be used as a timing advance of the user equipment in the second cell.

The second base station no longer requires, during the user equipment access procedure to the second base station, measuring a value to be used as a timing advance of the user equipment in the second cell.

However, the user equipment may still receive a data relating to a value to be used as a timing advance of the user equipment in the second cell while performing handover using the value to be used as a timing advance in the second cell. For example, the second base station may send data relating to a value to be used as a timing advance of the user equipment in the second cell to make small corrections of the timing advance value used to perform the uplink transmission. However, in that case the invention enables to reduce the radio resources required during the handover procedure (as described above) since the offset between the ideal value to be used and the determined value to be used is small.

By timing advance value or value to be used or used as a timing advance it is understood the value corresponding to the amount of time a signal takes to reach the base station from a user equipment.

By determining a value it is understood that the user equipment determines a value that the user equipment will be able to use to configure at least an uplink communication with the second base station. The output of the determination is therefore the value to be used as a timing advance in the second cell.

The determination may be based on a data related to timing advance of the user equipment in the second cell received from the first base station or from a base station to which the user equipment has been connected before being connected to the first base station.

The data is received from a base station to which the user equipment was connected before connecting to the second base station. Therefore, the data is received before performing any uplink communication between the user equipment and the second base station.

The determination may also be based on a value used as a timing advance in the first cell when no data related to timing advance of the user equipment in the second cell is received from the first base station or from a base station to which the user equipment has been connected before being connected to the first base station. Therefore, when no data related to timing advance of the user equipment in the second cell, the user equipment may use the value used as a timing advance in the first cell to determine the value to be used as a timing advance in the second cell. For example, the user equipment determines that the value to be used as a timing advance in the second cell is the same as the value used as a timing advance in the first cell.

The determination may also be based on a function of variation of the timing advance of the user equipment in the second cell. Therefore, the user equipment receives as a data related to timing advance of the user equipment in the second cell a data representing variation of the timing advance of the user equipment in the second cell, for example an index among a set of index representing different functions of the variation of timing advance of the user equipment in the second cell, or a value representing a parameter to be set in a generic function of the variation of timing advance of the user equipment in the second cell. Based on this index or value the user equipment may retrieve the function of the variation of timing advance of the user equipment in the second cell and based on this function the user equipment may determine the value to be used as timing advance value of the user equipment in the second cell. For example, the output of the function at t=0 may be the value to be used as timing advance of the user equipment in the second cell as described in the disclosure. The user equipment may determine the following value to be used for the user equipment in the second cell based on the outputs of the function at t > 0, t representing the elapsed time since the connection to the second base station of the user equipment. Therefore, the update of the timing advance value in the second cell doesn't require signaling or at least less signaling (signaling may be required to correct the timing advance value, but such correction may be done less often and/or may require less signaling since the offset between the updated value, determined via the function, and the corrected value is smaller than the offset between the timing advance value used by the user equipment and the updated value signaled by the second base station when not constantly updated the timing advance value via the function but via feedback of the second base station).

The determination may also be based on a function of variation of the timing advance of the user equipment in the first and/or second cell. Optionally, a supplementary a time difference may also be used in the determination. For example, if the user equipment uses a timing advance value based on the function of variation of the timing advance of the user equipment in the first cell at time t', then the output of the function of variation of the timing advance of the user equipment in the fist and/or second cell at t=t'+Δt may be the value to be used as timing advance of the user equipment in the second cell at time t'+Δt, as described in the disclosure.

By value used as a timing advance in the first cell it is understood any one of the values used as a timing advance in the first cell by the user equipment. Indeed, once connected with a base station the timing advance of a user equipment is continuously updated, especially in the context of non-geostationary orbit satellites which move relatively to the earth surface. The value used as a timing advance in the first cell based on which the user equipment determines the value to be used as a timing advance in the second cell may for example be the first or the last value used as a timing advance in the first cell. In another example, the value used as a timing advance in the first cell based on which the user equipment determines the value to be used as a timing advance in the second cell may for example be a value or an index of a function of variation of the timing advance in the first cell.

By a value used (or to be used) as a timing advance of the user equipment in a specific cell it is understood that the user equipment applies a time offset based on this value to compensate the time required for the signal to propagate, that is to travel, from the user equipment to the base station. The base station corresponding to this specific cell may also use the value to determine scheduled resources to the user equipment. Therefore, the base station and the user equipment may use the value.

By data related to timing advance it is understood data enabling the user equipment to determine a timing advance value.

By performing a handover between a first cell and a second cell it is understood that the user equipment connected to the first base station, connects to the second base station. The connection to the first base station may be released. Therefore, a communication established with the user equipment in the first cell or a transmission of data to the user equipment via the first cell, if not completed, will be continued through the second cell.

By satellite communication network it is understood a communication network which uses satellites to receive radio signals from the user equipments and/or emit radio signals to the user equipments to perform communication with the user equipments of the communication network. The satellite communication network may exclusively use satellites to establish physical links with the user equipments of the communication network or may also use non-satellite equipments, for example a terrestrial antenna or gateway. A satellite communication network may be incorporated in a hybrid network, that is, a satellite-terrestrial network.

By a cell corresponding to a base station it is understood a cell through which the user equipment may transmit or receive radio signals when connected to the base station.

By a cell supported by a satellite it is understood that transmitting to the user equipment through the cell or receiving from the user equipment through the cell involves sending radio signals between the user equipment and the satellite. A cell might comprise one or several beams.

A non-geostationary orbit satellite is a satellite which moves relatively to the earth.

The non-geostationary orbit satellite may be a satellite with fixed beams, such as for example a non-geostationary satellite equipped with non-steerable antenna panels, having beams pointing in a fixed direction with respect to the satellite, and by consequence deploying at the surface of the Earth a footprint which is moving, with respect to the Earth surface, as a consequence of the satellite's movement with respect to the Earth.

According to an aspect of the invention, data related to timing advance of the user equipment in the second cell comprises at least one of the among:

- data related to a value to be used as a timing advance of the user equipment in the second cell;
- data informing the user equipment that the value to be used as a timing advance of the user equipment in the second cell is different from the value used as a timing advance of the user equipment in the first cell; and
- data informing the user equipment that the value to be used as a timing advance of the user equipment in the second cell is the same as a value used as a timing advance of the user equipment in the first cell.

The transmission to the user equipment of data informing that the value to be used as a timing advance in the second cell is different from the value used as a timing advance in the first cell enables to easily remove the signaling needed to inform the user equipment that the timing advance doesn't need to be updated when connecting to the second base station (that is, signaling that informs the user equipment that the value to be used as a timing advance in the second cell is the same as a value used as a timing advance in the first cell can be removed). Based on this data the user equipment determines that the value to be used as a timing advance in the second cell is different than a value used as a timing advance of the user equipment in the first cell or synonymously, that the value to be used as a timing advance should be updated when performing the handover from the first cell to the second cell. Therefore, data may be transmitted only when the user equipment needs to update the value of the timing advance when connecting to the second base station after being connected to the first base station. Thus, no signaling or at least less signaling is required during handovers where no update of the time advance is required. Therefore, in this case no data related to timing advance may be sent when the value to be used as a timing advance of the user equipment in the second cell is the same as a value used as a timing advance of the user equipment in the first cell. Therefore, when no data related to timing advance of the user equipment in the second cell is received by the user equipment, the user equipment may determine that the value to be used as a timing advance in the second cell is the one used in the first cell (for example the last timing advance value used in the first cell). When an update of the timing advance value is required, the update may be performed using classical procedures. The transmission to the user equipment of such data informing the user equipment that the value to be used as a timing advance of the user equipment in the second cell is different from the value used as a timing advance of the user equipment in the first cell may for example be performed when the first cell and the second cell are not supported by the same satellite or the first base station and the second base station are not co-localized.

By updating a timing advance value or a value to be used as of a timing advance it is understood that the timing advance value of the user equipment is changed between the value previously (the last value used while being connected with first base station) used by the user equipment as a timing advance in the first cell and a new value to be used in the second cell.

The transmission to the user equipment of data informing that the value to be used as a timing advance in the second cell is the same than a value used as a timing advance in the first cell enables to avoid the second base station to compute a value of the timing advance and to transmit this one during the handover procedure. In this case no update of the timing advance value of the user equipment is performed when performing a handover from the first cell to the second cell. The transmission of such data informing the user equipment may for example be performed when the first cell and the second cell are supported by the same satellite and the first base station and the second base station are co-localized.

The transmission to the user equipment of data related to a value to be used as a timing advance of the user equipment in the second cell enables the user equipment to determine the timing advance value to be used in the second cell even though the value to be used as timing advance in the second cell is different from the one used in the first cell. This information is advantageous when the value to be used as a timing advance in the second cell is different from the value used as a timing advance in the first cell, for example when the first cell and the second cell are not supported by the same satellite or the first base station and the second base station are not co-localized.

Such data related to a value to be used as a timing advance of the user equipment in the second cell may comprise at least one among:

- Data corresponding to a value, for example data comprising the value or data encoding the value or data representative of an index and/or a function allowing to compute the value. Therefore, the user equipment may determine the timing advance value to be used in the second cell directly from the data.

- Data corresponding to an offset from a value used as a timing advance of the user equipment in the first cell. Therefore, the user equipment may determine the timing advance value to be used in the second cell by a simple operation.

- Data corresponding to an offset from a generic value. Therefore, the user equipment may determine the timing advance value to be used in the second cell by a simple operation. Such generic value may be known by the user equipment for example stored by the user equipment when performing a first connection to the satellite network. The generic value maybe for example a network generic value or a satellite generic value (that is specified for each satellite), or a base station generic value (that is, specified for each base station) or may be for example a value common to a beam, a group of beams or group of base stations, or to a group of users. The generic value may also be a function or an index of a function of variation.

- Data related to a value of a reference signal receive power, RSRP . Therefore, the user equipment may determine the timing advance value to be used in the second cell based on a signaled RSRP threshold (e.g. an RSRP threshold in a conditional handover procedure) and a correspondence between this value and the timing advance value in the target cell.

According to an aspect of the invention, the uplink transmission performed with the second base station is a first uplink transmission performed with the second base station.

Therefore, the value determined by the user equipment is used for the first uplink transmission performed between the user equipment and the second base station. This enables to reduce the radio resource reserved by the second base station for the reception of the first uplink transmission. Indeed, if the first uplink transmission is performed without implementing the correct timing advance value (or without any timing advance) the first uplink transmission will not be aligned at the side of the second base station. Therefore, the second base station will have to reserve more radio resources to ensure that the first uplink transmission (the first signal emitted by the user equipment for the second base station) does not interfere with other uplink radio signals from other user equipments. Moreover, in the context of satellite communications, the values used as timing advance by user equipments in the same cell may be very important compared to terrestrial communication and, in addition, they also may strongly differ to each other compared to the terrestrial communication context. Therefore, the amount of reserved radio resources required for the first uplink transmission can be important. In the context of NR these reserved radio resources correspond for example to the preamble receiving window which is configured in the context of the 4 step RACH procedure which is performed during the handover procedure.

A second aspect of the invention concerns a user equipment configured to perform a handover procedure between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the user equipment comprising:

a processor; and

a non-transitory computer-readable medium comprising instructions stored thereon, which when executed by the processor configure the user equipment to:

determine a value to be used as a timing advance in the second cell, the value to be used as a timing advance in the second cell being determined based on:

- a data related to timing advance of the user equipment in the second cell, received from the first base station or from a base station to which the user equipment has been connected before being connected to the first base station, or

- a value used as a timing advance in the first cell when no data related to timing advance of the user equipment in the second cell is received from the first base station or from a base station to which the user equipment has been connected before being connected to the first base station ;

perform an uplink transmission with the second base station using the value to be used as a timing advance in the second cell.

A third aspect of the invention concerns a method for managing a handover of a user equipment between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining, before the second base station receives any signal from the user equipment, a value to be used as a timing advance of the user equipment in the second cell;
performing an uplink transmission between the second base station and the user equipment using the value to be used as a timing advance of the user equipment in the second cell.

Therefore, to perform an uplink communication between the user equipment and the second base station, that is, the base station to which the user equipment connects to, it is no longer necessary that the second base station estimates, based on an uplink signal received from the user equipment, a timing advance value that the target base station needs to know in order to be able to schedule uplink resources to the user equipment. Therefore, scheduling may be performed based on the value to be used as a timing advance of the user equipment in the second cell and previously determined. In addition, if the user equipment can determine the timing advance value to be used before performing handover according to the invention as previously described or using location information (for example using a GNSS) it is no longer necessary for the second base station to transmit though signaling timing advance data. It is also not necessary for the user equipment to transmit to the second base station timing advance data. Therefore, less signaling is required to enable the user equipment to connect to the second base station (for example while performing a handover).

In addition, less computing is required to estimate the timing advance of the user equipment during the connection of the user equipment to the second base station since the determination of the value to be used as a timing advance of the user equipment in the second cell is performed before the second base station receives any signal from the user equipment. Therefore, less computing is required during the handover procedure to perform the handover of the user equipment from the first cell to the second cell. The second base station no longer requires measuring a value to be used as a timing advance of the user equipment in the second cell during the handover procedure.

Therefore, and as previously mentioned, the invention enables to reduce the computing and signaling during the handover which for example in the context of most wireless standard (for example, LTE, Advanced LTE or New Radio) may enable to remove one message during the handover procedure (for example the RACH preamble or the second message (Msg2) sent by the second base station during the RACH procedure, and/or in some cases skip the RACH procedure altogether). Removing those messages enables to reduce the handover latency. In addition, removing those messages (or at least applying a timing advance offset while sending those messages) also enables to release important amount of radio resources, since the exchanges performed between the second base station and the user equipment during the handover procedure when the user equipment (and eventually the second base station) does not yet implement a time offset based on the timing advance value (to compensate the time required for the signal to propagate) require the second base station to reserve much more radio resources than classical exchange. Indeed, the second base station cannot (or only poorly) predict the time of reception of these exchanges, therefore to avoid interferences with other transmissions (and thus to reduce the number of unsuccessful access procedures) the second base station must reserve important radio resources to take into account possible delays due to signal propagation. Therefore, determining by the network the value to be used as a timing advance in the second cell before performing a handover procedure and while the user equipment is connected to a base station (that is, the first base station or a base station to which the user equipment was connected before being connected to the first base station) is less radio resource consuming.

The uplink transmission performed with the second base station using the value to be used as a timing advance in the second cell may either be an uplink transmission performed during the handover procedure (for example, Msg1 or Msg3 of the 4-step RACH procedure, or an uplink message during a modified RACH procedure) or after the handover procedure (for example, the first uplink transmission performed after the handover) or even the first uplink transmission performed with the second base station (for example, if no RACH procedure is required or needed).

The method may further comprise performing a handover procedure from the first base station to the second base station. Such handover may be performed without transmitting to the user equipment through the second cell (target cell) data relating to a value to be used as a timing advance of the user equipment in the second cell. The uplink transmission performed may be performed as part of the handover procedure. However, the uplink transmission performed may also be performed out of the frame of the handover procedure, for example after or before a handover procedure. The method may further comprise performing the handover procedure with reduced reserved radio resources.

By performing an uplink transmission between the second base station and the user equipment using the timing advance value it is understood that the second base station configures the uplink transmission based on the timing advance value determined. For example, the second base station may schedule the uplink resources allocated to the user equipment based on the timing advance value determined.

By determining a value to be used as a timing advance of the user equipment in the second cell it is understood that either the first base station, the second base station or any other network entity except the user equipment (or any combination of two or more of these network entities) determines the timing advance value to be used in the second cell. The determination is made before the second base station receives any signal from the user equipment, that is, the determination is made without any data exchange directly between the user equipment and the second base station. The determination may therefore be made before any handover procedure of the user equipment between the first base station and the second base station.

Determining the timing advance value is done based on the satellite network topology (beam and satellite topology), and/or on which satellite of the network supports each cell and/or if the base stations corresponding to each cell are on earth (also referred to as satellite with transparent payload) or on board the satellite, entirely or partly (also referred to as satellite with regenerative payload) and/or the physical positions of the base stations relatively to each other (co-localized or not). Such elements may be known by the network entity which determines the timing advance value (first base station or second base station or another entity (except the user equipment) or several of these entities).

That is, determining if the first cell and the second cell are supported by the same satellite and if the first base station and the second base station are co-localized, may be done, especially since the satellite follows a deterministic orbit, when configuring or re-configuring the network and/or the base stations, or may be done in a more dynamic way based on information of the positions of the other satellites and/or beams which can be acquired by configuration (for instance the operation and maintenance configuration (O&M)) and/or inter-base stations exchanges (for example, inter-base station configuration exchange through Xn links).

To determine the value, the network entity (except the user equipment) determines if the timing advance value to be used by the user equipment in the second cell is the same or different than the timing advance value used by the user equipment in the first cell. When the timing advance value to be used by the user equipment in the second cell is different than the timing advance value used by the user equipment in the first cell, determining the value may also include computing the timing advance value to be used by the user equipment in the second cell. Several methods of computing will be seen in the following.

Network entity refers to one among the first base station, the second base station, another base station of the satellite network or any other entity of the satellite network other than a user equipment. The network entity at least determines the value to be used by the user equipment in the second cell. In addition, for the sake of simplicity, in the following the term network entity also refers to the case where the network entity includes several network entities other than a user equipment (for example the first and the second base station).

According to an aspect of the invention, when the first cell and the second cell are supported by the same satellite and the first base station and the second base station are co-localized, the determined value is the same as a value used as a timing advance of the user equipment in the first cell. In a variant, the determined value and the value used as a timing advance of the user equipment in the first cell are values of a same function of timing advance variation against time.

Therefore, in these specific conditions regarding the beams topology and the position of the second base station relatively to the first base station, the network entity determines that the same timing advance value (and/or the same variation function) as the one used in the first cell may be used in the second cell. Indeed, when the base stations are co-localized on board of the same satellite (thus the cells corresponding to these base stations are supported by the same satellite) or co-localized on earth and that the cells corresponding to these base stations are supported by the same satellite then a signal emitted by the user equipment takes the same time to reach the first base station than the second base station, thus the timing advance value used in the first cell can be used in the second cell. In addition, the function describing the variation of the timing advance of the user equipment against time when the user equipment travels through the first and second cells does not depend on the handover time.

Based on the topology of the network, the value to be used as a timing advance of the user equipment in the second cell is determined without requiring any complex computing. The network entity which determines the timing advance value can use the timing advance value used in the first cell as a timing advance value in the second cell.

By base stations co-localized it is referred to base stations physically located in the same geographical location, for example on the same satellite or on earth in the same location/gateway. Synonymously, two base stations are co-localized if signals emitted by these base stations always take the same time to reach the satellite which supports the cells corresponding to these two base stations.

According to an aspect of the invention, when the first cell and the second cell are supported by different satellites or that the first base station and the second base station are not co-localized, the value to be used as a timing advance of the user equipment in the second cell is different than a value used as a timing advance of the user equipment in the first cell.

According to an aspect of the invention, determining (for example computing) the value to be used as a timing advance of the user equipment in the second cell is based on at least one value used or previously used as a timing advance of another user equipment in the second cell.

The at least one value used or previously used as a timing advance has already been computed according to a method of the present disclosure or measured according to any existing method, therefore, using it as a timing advance of the user equipment in the second cell enables an accurate determination of the value to be used as timing advance for the user equipment in the second cell without requiring any complex computing. For example, the value to be used as a timing advance of the user equipment in the second cell is a value used or previously used as a timing advance of another user equipment in the second cell.

The determination of the at least one value used or previously used as a timing advance of another user equipment in the second cell may be performed by a network entity, for example by the second base station.

According to an aspect of the invention, the at least one value used or previously used as a timing advance of the another user equipment in the second cell is used or previously used as a timing advance of the another user equipment in the second cell for:

-   an uplink transmission between the another user equipment and the second base station before being connected to the second cell (for example during the handover procedure), or
- a first uplink transmission of the another user equipment once connected to the second cell.

Therefore, the at least one value used for an uplink transmission in the second cell is used while the another user equipment is in a similar situation than the user equipment, that is, both user equipments are at the periphery of the second cell. Thus, determining the value to be used as a timing advance of the user equipment in the second cell based on this at least one value is more accurate. For example, the network entity may determine the timing advance value of the user equipment to be the same as the at least one value.

In addition, the another user equipment may also have performed a handover from the first cell to the second cell, therefore, the similarity is greater between the situations of the user equipment and the another user equipment than the situations of the user equipment and other user equipments which have performed a handover from another cell to the second cell. Indeed, the overlapping between the first cell and the second cell may be different than the overlapping between the second cell and another cell. When overlapping is more important, the user equipment may perform handover while being closer to the center of the cell to which it connects than when the overlapping is less important. Therefore, depending on the overlapping between two cells the timing advance value used once a user equipment performs a handover between those two cells may differ. When dealing with a first and a second cell containing neighboring first and second beams, first and second being understood as deployed parallel to the LEO orbit and numbered in the opposite direction of the movement of a LEO satellite, then the vast majority of users equipments of the first cell perform handover towards the second cell (and not to a different third cell) due to the fact that the satellite mobility is much higher than the user equipment mobility.

According to an aspect of the invention, the at least one value is associated with a time stamp, said time stamp corresponding to a moment of a determination of the at least one value, and wherein a time duration between the moment of the determination of the at least one value and the determination of the value to be used as a timing advance of the user equipment in the second cell is under a predetermined threshold.

Therefore, the value to be used as a timing advance for the user equipment in the second cell cannot be determined based on the at least one value if the determination of the at least one value happened too long before determining the value to be used as a timing advance for the user equipment in the second cell. This enables to insure that the user equipment and the another user equipment are in a limited geographical area (for example, within or near the area of overlapping between the first and the second cell), since the determination of the at least one value occurred not long ago. Therefore, the another user equipment is in a similar situation than the user equipment, that is, both user equipments are within a limited geographical area and they may be at similar altitudes. Thus, determining the value to be used as a timing advance of the user equipment in the second cell based on this at least one value is more accurate.

According to an aspect of the invention, the at least one value is associated with a geographical area such that, at the moment of a determination of the at least one value said geographical area intersects a geographical coverage of the second cell, and when performing the uplink transmission between the second base station and the user equipment, said geographical area intersects a geographical coverage of the second cell.

Therefore, the value to be used as a timing advance for the user equipment in the second cell cannot be determined based on the at least one value if the determination of the at least one value happened while the another user equipment was at a location too far from the actual location of the user equipment (when determining its timing advance value). This enables to insure that the position of the user equipment when performing the uplink transmission and the position of the another user equipment when it's at least one value has been determined are close. Therefore, the another user equipment is in a similar situation than the user equipment, that is, both user equipments are geographically close and they may be at similar altitudes. Thus, determining the value to be used as a timing advance of the user equipment in the second cell based on this at least one value is more accurate.

By geographical area intersecting a geographical coverage of the second cell it is understood that at least a beam foot print of a beam being used by the second base station for communicating with user equipments intersect with the geographical area. In addition, the beam being used by the second base station for communicating with user equipments may also be the beam through which:

- the uplink transmission between the second base station and the user equipment is performed, and/or
- the second base station communicates or has communicated with the another user equipment using the at least one value.

The geographical area may be defined as a predetermined zone on the Earth's surface. The geographical area may be one among other geographical areas creating a cover of at least part of the earth's surface. The geographical areas may have different sizes. The network may deduce from exchanges with the user equipment if a user equipment is in a beam foot print or not and therefore may deduce his proximity to one geographical area. The network may also have some location information of the user, acquired for example through positioning techniques.

According to an aspect of the invention, the value to be used as a timing advance of the user equipment in the second cell is determined by the second base station.

In this case the method may further comprise transmitting by the second base station to the first base station or to a base station to which the user equipment is or will be connected before being connected to the first base station, data related to timing advance of the user equipment in the second cell, said data related to timing advance of the user equipment in the second cell corresponds to the value to be used as a timing advance of the user equipment in the second cell determined by the second base station. Based on the data related to timing advance of the user equipment in the second cell, the first base station (or a base station to which the user equipment is or will be connected before being connected to the first base station) may decide to (and be able to) transmit:

- to the user equipment, a data related to timing advance of the user equipment in the second cell (said data enabling the user equipment to determine the value to be used as a timing advance in the second cell); this data may be the same as the one transmitted by the second base station to the first base station or adapted to the user equipment (for example, the data can correspond to an offset between the value to be used as a timing advance of the user equipment in the second cell and the value used as a timing advance of the user equipment in the first cell), or
- to a base station (directly or via other base stations) to which the user equipment is connected and before the user equipment becomes connected to the first base station, the data related to timing advance of the user equipment in the second cell.

Based on the data related to timing advance of the user equipment in the second cell, the base station (which may be the first base station) to which the user equipment is connected may also decide not to transmit any data related to timing advance to the user equipment especially when the value to be used as a timing advance of the user equipment in the second cell is the same as the value to be used or used as a timing advance of the user equipment in the first cell.

According to an aspect of the invention, the value to be used as a timing advance of the user equipment in the second cell is determined based on at least a value used as a timing advance of the user equipment in the first cell.

That is, the network entity determines the value to be used as a timing advance of the user equipment in the second cell based on at least the value used as a timing advance of the user equipment in the first cell. Therefore, the value determined takes into account the situation of the user equipment more precisely and thus leads to a precise determination of the value to be used as a timing advance of the user equipment in the second cell.

For example, the value to be used as a timing advance of the user equipment in the second cell may be determined based on at least:

- a minimum value used as a timing advance of the user equipment in the first cell, and/or
- a position of a center of a second beam footprint relatively to a position of a center of a first beam footprint, the first beam being used by the first base station for communicating with the user equipment and the second beam being used by the second base station for performing the uplink transmission between the second base station and the user equipment; and/or
- a position of a geographical coverage of the first cell, and/or
- a position of a geographical coverage of the second cell, and/or
- an evolution (that is, a variation) the value used as a timing advance of the user equipment in the first cell; and/or
- a value used as a timing advance of the user equipment in the first cell determined at a given time after the user equipment performed a handover to connect to the first base station or at a given time before the user equipment performes a handover to connect to the second base station; and/or
- a satellite moving direction.

In the case where the value is determined based on a position of a center of a second beam footprint relatively to a position of a center of a first beam footprint, the user equipment communicates with the first base station, while being connected to it, through the first beam. This connection to the first base station is prior to the connection to second base station.

By geographical coverage of a cell it is understood the union of the beam footprints of the beams that support the cell. The beams that support the cell are all the beams that user equipments can use to communicate (send or receive) through the cell, that is, to communicate via the base station corresponding to the cell.

By satellite moving direction it is understood for example the direction of the movement of the satellite in its orbit, or a projection of this movement on the terrestrial surface, or any equivalent form of representing the above described direction.

These elements based on which the value to be used as a timing advance of the user equipment in the second cell may be determined are known by the network entity either by receiving them from base stations and/or configuration of the satellite network (for example, the satellite moving direction) and/or computation (for example, a position of a geographical coverage of a cell, an estimated position of the user equipment or a rough estimation related to its position with respect to a reference point in the system, etc). For example, when the network entity which determines the value to be used as a timing advance of the user equipment in the second cell is the first base station, the second base station can send to the first base station information related:

- to a position of a geographical coverage of the second cell, or
- a position of a center of a second beam footprint, based on which the first base station can compute a position of a center of a second beam footprint relatively to a position of a center of a first beam footprint.

Therefore, according to an aspect of the invention, the value to be used as a timing advance of the user equipment in the second cell is determined by the first base station. In this case the value may be determined based on information provided by the second base station.
According to an aspect of the invention, the method further comprises transmitting from the first base station or from a base station to which the user equipment has been connected before being connected to the first base station, data related to timing advance of the user equipment in the second cell corresponding to the value determined. This data enables the user equipment to retrieve the value to be used as a timing advance of the user equipment in the second cell.
According to an aspect off the invention, the method further comprises setting a handover mode to active or non-active and sending to the user equipment a message to instruct to perform handover according to the handover mode set, the active handover mode being a handover mode where handovers are performed according to the invention and non-active handover mode being a mode where handover are performed according to another handover procedure (for example, a standard handover procedure). Active handover mode may be divided in two modes:

- a first mode where the another handover procedure is implemented when the value to be used as timing advance in the second cell is different from the value used as timing advance in the first cell and where handovers are performed according to the invention when the value to be used as timing advance in the second cell is the same from the value used as timing advance in the first cell;
- a second mode where handovers are performed according to the invention.

A fourth aspect of the invention concerns a second base station configured for managing a handover of a user equipment between a first cell and a second cell in a network comprising a satellite communication network, the first cell and the second cell being supported by one or more satellites of the satellite communication network, the first cell corresponding to a first base station and the second cell corresponding to the second base station, at least the first cell being supported by a non-geostationary orbit satellite of the satellite communication network, the second base station comprising:

a processor; and

a non-transitory computer-readable medium comprising instructions stored thereon, which when executed by the processor configure the second base station to:

- determine a value to be used as a timing advance of the user equipment in the second cell;
- perform an uplink transmission between the second base station and the user equipment using the value to be used as a timing advance of the user equipment in the second cell.

In this case the network entity is the second base station. Therefore, the network entity performs in addition to the determination of the value, the uplink transmission with the user equipment (that is, receives and processes an uplink signal transmitted by the user equipment).
A fifth aspect of the invention concerns a method for managing a handover of a user equipment between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining a value to be used as a timing advance of the user equipment in the second cell;

transmitting to the second base station and/or the user equipment, before the second base station receives any signal from the user equipment, the value to be used as a timing advance of the user equipment in the second cell.

When the network entity is not the second base station, that is, when the determination of the value is performed by another entity than the second base station, the network entity may transmit the value determined:

- to the user equipment, especially when the user equipment is not able to localize itself and eventually to compute the value to be used as a timing advance in the second cell;
- to the second base, to avoid the second base station any estimation and transmission of the timing advance during the handover.

In this case the network entity may be the first base station or any other network entity except the user equipment and the second base station.

A sixth aspect of the invention concerns a first base station configured for managing a handover of a user equipment between a first cell and a second cell in a network comprising a satellite communication network, the first cell and the second cell being supported by one or more satellites of the satellite communication network, the first cell corresponding to the first base station and the second cell corresponding to a second base station, at least the first cell being supported by a non-geostationary orbit satellite of the satellite communication network, the first base station comprising:

a processor; and

a non-transitory computer-readable medium comprising instructions stored thereon, which when executed by the processor configure the first base station to:

- determine a value to be used as a timing advance of the user equipment in the second cell;
- transmit to the second base station and/or the user equipment, before the second base station receives any signal from the user equipment, the value to be used as a timing advance of the user equipment in the second cell.

A seventh aspect of the invention concerns a non-transitory computer-readable medium comprising instructions stored thereon, which when executed by a processor perform the previous methods.

Computer-readable medium include, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable medium may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The present invention is illustrated by way of example, and not by way of limitation, in the figures of the accompanying drawings, in which like reference numerals refer to similar elements and in which:

- Figure 1 illustrates several satellites in a satellite communication network ;
- Figure 2 illustrates a method to determine the value to be used as timing advance of the user equipment in the second cell according to the invention ;
- Figure 3 illustrates a method to determine the value to be used as timing advance of the user equipment in the second cell according to the invention ;
- Figure 4 illustrates a method to determine the value to be used as timing advance of the user equipment in the second cell according to the invention ;
- Figure 5 illustrates a method to determine the value to be used as timing advance of the user equipment in the second cell according to the invention ;

- Figure 6 illustrates a flowchart representing the steps implemented by the user equipment to perform a handover according to the invention ;
- Figure 7 illustrates a flowchart representing the steps implemented by the satellite network to manage a handover according to the invention.

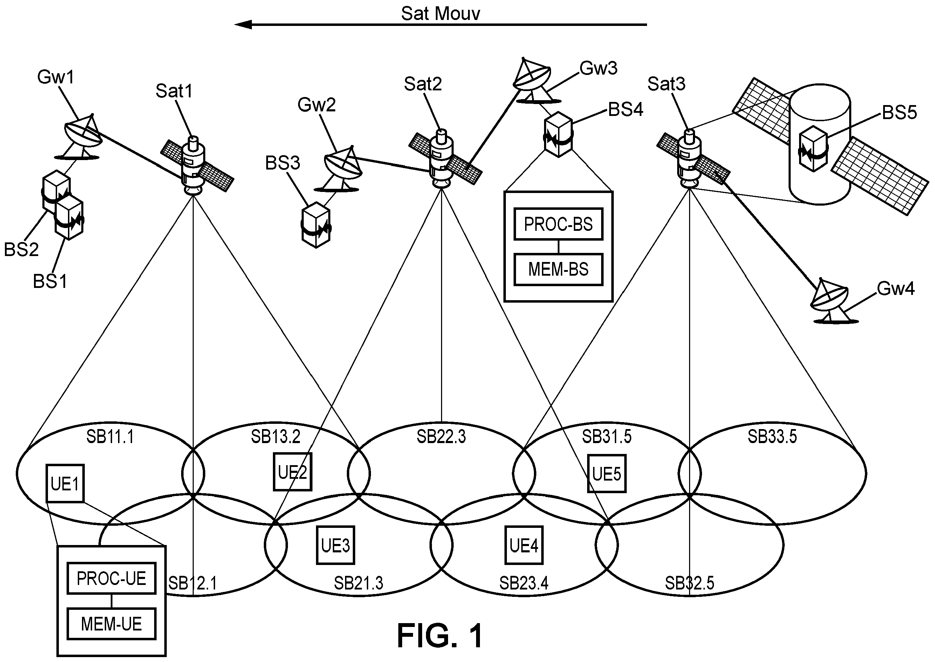

Referring to Figure 1, there is shown part of a satellite communication network. The invention is not limited to specific standard, however for the sake of simplicity the invention will be described in the context of the New Radio (NR) standard. The NR standard uses the term user equipment to refer to a device used by an end-user to communicate, however, any other terminologies (for example, a mobile terminal, a mobile station, a personal digital assistant, a wireless modem, a handheld device, etc.) used to refer to any wireless devices used to communicate at least via the satellite network are here encompass in the term user equipment.

The invention described below may be used for various types or architectures of satellite communication network, for example hybrid network including a satellite network component.

In figure 1 three satellites are represented Sat1, Sat2, Sat3. Each satellite is linked to one or more gateway node Gw1 to Gw4. Two satellites can be linked to the same gateway node which is not represented here. These gateway nodes Gw1 to Gw4 are thus configured to communicate with one or several satellite nodes Sat1, Sat2, Sat3. In addition, these gateway nodes Gw1 to Gw4 are configured to communicate with the core network which is not represented here.

Each satellite Sat1, Sat2 or Sat3 is configured to produce one or more satellite beam, for each satellite, three satellite beams are represented on figure 1. The first satellite Sat1 produces the satellite beams SB11.1, SB12.1, SB13.2. The second satellite Sat2 produces the satellite beams SB21.3, SB22.3, SB23.4. The third satellite Sat3 produces the satellite beams SB31.5, SB32.5, SB33.5.

Each satellite beam SB11.1 to SB33.4 is configured in a specific frequency band. Through each satellite beam SB11.1 to SB33.4, the corresponding satellite (that is, the satellite which produces the beam) may transmit and receive data according to radio resources allocated in the frequency band configured for the beam. These radio resources may be shared according to a frequency division scheme (for example, Frequency Division multiplexing (FDM) or Orthogonal frequency-division multiplexing (OFDM)) or by a time division scheme (for example, Time-division multiplexing (TDM)) or code division scheme (code division multiplexing (CDM)), or according to polarization, or a combination thereof.

The allocation of the radio resources of each beam is achieved by base stations BS1 to BS5. Each base station manages the radio resources of one or more satellite beams. For example, and as represented on figure 1:

- BS1 manages the radio resources of satellite beams SB11.1 and SB12.1,
- BS2 manages the radio resources of satellite beam SB13.2,
- BS3 manages the radio resources of satellite beams SB21.3 and SB22.3,
- BS4 manages the radio resources of satellite beam SB23.4,
- BS5 manages the radio resources of satellite beams SB31.5 and SB33.5.

Each base station defines a cell in which the user equipments are allocated the radio resources according to the beams the base station manages. That is, a user equipment may be allocated radio resources of a satellite beam (if the user equipment receives sufficient radio power from this satellite beam) by the base station managing this satellite beam. The user equipment is therefore considered under coverage of the cell corresponding to the base station. Therefore, according to figure 1, BS1 forms a first cell, C1, covering the user equipments receiving sufficient radio power from the satellite beams SB11.1 and SB12.1. BS2 forms a second cell, C2, covering the user equipments receiving sufficient radio power from the satellite beam SB 13.2. BS3 forms a third cell, C3, covering the user equipments receiving sufficient radio power from the satellite beams SB21.3 and SB22.3. BS5 forms a fifth cell, C5, covering the user equipments receiving sufficient radio power from the satellite beams SB31.5 and SB33.5. Therefore, a cell may correspond to a beam (for example, C2 and C4) or to a set of beams (for example, C1, C3 and C5).

The base stations may be located on board the satellite (BS5) or on earth (BS1 to BS4). Two base stations are co-localized if they are physically located in the same geographical location, which is the case of BS1 and BS2 but not the case for example of BS2 and BS3 or BS3 and BS4.

To be allocated radio resources by a base station a user equipement must receive sufficient radio power from at least one beam managed by that base station (that is the user equipment must be in the coverage of the cell formed by the base station) and be connected to that base station. Connection procedure may be performed as an initial access to the base station or when the user equipment was already connected to another base station and accesses the current base station through a handover procedure.

On figure 1 several user equipments UE1 to UE5 are represented. UE1 is connected to BS1 in the first cell C1 and is allocated radio resources of the satellite beam SB11.1 produced by satellite Sat1. UE2 is connected to BS2 in the second cell C2 and is allocated radio resources of the satellite beam SB 13.2 produced by satellite Sat1. UE3 is connected to BS3 in the third cell C3 and is allocated radio resources of the satellite beam SB21.3 produced by satellite Sat2. UE4 is connected to BS4 in fourth cell C4 and is allocated radio resources of the satellite beam SB23.4 produced by satellite Sat2. UE5 is connected to BS5 in fifth cell C5 and is allocated radio resources of the satellite beam SB31.5 produced by satellite Sat3.

In the context of satellite network using non-geostationary orbit satellites and moreover satellite with fixed beams, the satellites and therefore their beams' footprints move relatively to the earth surface in a predictable way (since satellite constellation dynamic is predictable). The movement of the satellites relatively to the earth surface is represented on figure 1 by the arrow Sat Mouv.

Based on this predictable satellite constellation dynamic, and given the fact that the mobility of the UE is negligible with respect to the satellite mobility, it is possible to predict which are the base stations a user equipment will have to connect to (for example by performing a handover) in order to pursue communicating through the satellite communication network. According to figure 1, UE1 is connected to BS1 and will most likely perform a handover from BS1 to BS2 and then a handover from BS2 to BS3 and then a handover from BS3 to BS5 and so on. UE2 is connected to BS2 and will most likely perform a handover from BS2 to BS3 and then a handover from BS3 to BS5 and so on. UE3 is connected to BS3 and will most likely perform a handover from BS3 to BS4 and then a handover from BS4 to BS5 and so on. UE4 is connected to BS4 and will most likely perform a handover from BS4 to BS5 and so on.

However, to be able to perform a correct communication between the user equipment and the base station (target base station or second base station) to which the user equipment will be connected, the base station and the user equipment must acquire the value of the timing advance to be used with said base station (that is in the cell managed by this base station). In NR standard, acquiring said value involves performing a RACH procedure during which the base station (to which the user equipment connects to) measures and sends the value of the timing advance to use.

However, when the cell (first cell) currently serving the user equipment and the target cell (second cell) are supported by the same satellite and when the base station to which is currently connected the user equipment (first base station) and the target base station (second base station) are co-localized, the value to be used with the second base station is the same as the value used with the first base station. Therefore, according to figure 1, since BS1 and BS2 are co-localized and that C1 and C2 are both supported by Sat1, the value to be used as a timing advance of UE1 in C2 is the same as the value used as a timing advance of UE1 in C1 (for example, the last value used in C1). In an equivalent description, by taking into account that the timing advance value of UE1 varies against time while UE1 crosses C1, C2, etc, when the cell (first cell) currently serving the user equipment and the target cell (second cell) are supported by the same satellite and when the base station to which is currently connected the user equipment (first base station) and the target base station (second base station) are co-localized, the function of variation of timing advance against time of the user equipment is continuous when the user equipment crosses C1 and C2, that is, the function does not depend on the moment of handover. In other words, the value to be used as a timing advance of UE1 in C1 and the value used as a timing advance of UE1 in C2 are values of a same function of variation of timing advance against time. In other words, function of variation of timing advance against time of UE1 in C1 is the same as the function of variation of timing advance against time of UE1 in C2.

On the contrary, when the cell (first cell) currently serving the user equipment and the target cell (second cell) are supported by different satellites or when the base station to which is currently connected the user equipment (first base station) and the target base station (second base station) are not co-localized, the value to be used with the second base station is different than the value used with the first base station. Therefore, according to figure 1, since BS2 and BS3 are not co-localized or that C2 and C3 are not supported by the same satellite Sat1 and Sat2, the value to be used as a timing advance of UE2 in C3 is different than the value used as a timing advance of UE2 in C2. Since BS3 and BS4 are not co-localized, the value to be used as a timing advance of UE3 in C4 is different than the value used as a timing advance of UE3 in C3. Since BS4 and BS5 are not co-localized or that C4 and C5 are not supported by the same satellite Sat2 and Sat3, the value to be used as a timing advance of UE4 in C5 is different than the value used as a timing advance of UE4 in C4. In these cases the value to be used as a timing advance in the second cell (respectively C3, C4 and C5) has to be estimated. In an equivalent description, by taking into account that the timing advance value of UE1 varies against time while UE1 crosses C2, C3, etc, when the cell (first cell) currently serving the user equipment and the target cell (second cell) are not supported by the same satellite and/or when the base station to which is currently connected the user equipment (first base station) and the target base station (second base station) are not co-localized, the function of variation of timing advance against time of the user equipment is discontinuous when the user equipment crosses C2 and C3, that is, the function depends on the moment of handover. In other words, the value to be used as a timing advance of UE1 in C2 and the value used as a timing advance of UE1 in C3 are different, as they can be interpreted as values of different functions variation of timing advance against time. In other words, function of variation of timing advance against time of UE1 in C1 is the same as the function of variation of timing advance against time of UE1 in C2.

Several methods to estimate (that is, determine) the value of the timing advance according to the invention will be describe below.

Each base station BS1 to BS5 comprises a processing module PROC-BS and a memory unit MEM-BS. The memory unit MEM-BS comprises a non-volatile unit which retrieves the computer program and a volatile unit which retrieves a value used as a timing advance in the second cell for another user equipment, a time stamp associated with this value, information relative to a geographical area, a function of the evolution of timing advance value of the user equipment in the first cell, a position of the user equipment, a minimum timing advance value of the user equipment in the first cell, a timing advance value experience in the first cell at a given time instant, the ephemeris of the satellite constellation, information on the beams footprint of the satellite network, etc. The processing module PROC-BS is configured to compute the position of the user equipment, to determine the value to be used as timing advance for the user equipment in the second cell, to transmit data related to timing advance of the user equipment in the second cell, to perform handover, to perform uplink transmission, to perform resource scheduling.

Each user equipment comprises one communication module (COM_UE) 1.4, one processing module PROC-UE and a memory unit MEM-UE. The memory unit MEM-UE comprises a non-volatile unit which retrieves the computer program and a volatile unit which retrieves a value to be used as a timing advance in the second cell, a value used as a timing advance in the first cell, a generic value, a handover mode, a satellite generic value, a network generic value, a base station generic value, an offset from a value used as a timing advance in the first cell, an offset from a generic value. The processing module PROC-UE is configured to receive and decode data related to timing advance of the user equipment in the second cell, determine a value to be used as a timing advance in the second cell and perform an uplink transmission with the second base station using the value to be used as a timing advance in the second cell.

The user equipment can be as well a mobile user equipment or a fixed user equipment.

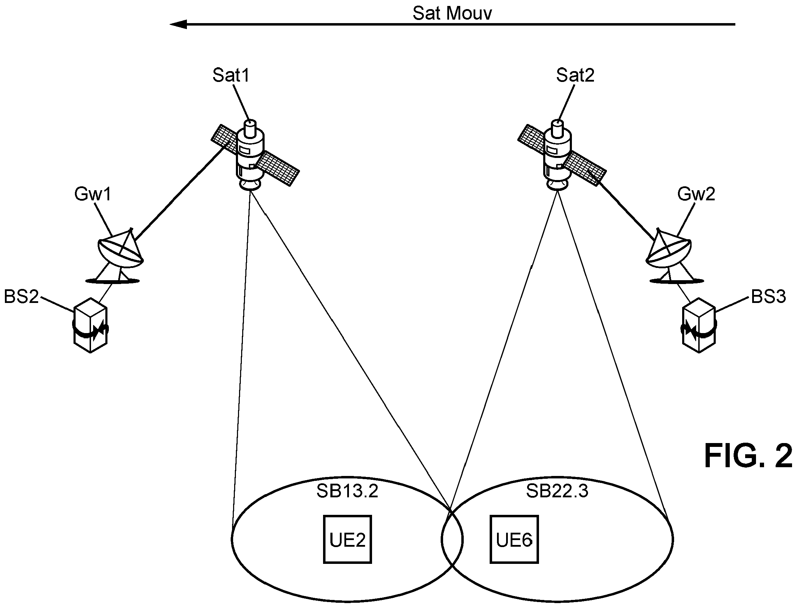

Figure 2 represents the same satellite communication network as the one represented in figure 1. A user equipment UE6 (also referred in the application as the another user equipment) has been added. UE6 is connected to BS3, for example after having performed a handover from BS2 to BS3 (said in another way, a handover from C2 to C3). As previously mentioned, since UE6 is connected to BS3, BS3 knows the value of the timing advance of UE6 in C3 and its intermediate values and/or variations starting with the moment when UE6 accessed BS3. The value of the timing advance of UE6 in C3 may have been determined by any method (existing method or method according to the invention).

UE2 is connected to BS2 and will have to perform a handover from BS2 (first base station) to BS3 (second base station). BS3 may determine the value to be used as timing advance of the user equipment in C3 based on one or some of the values used for UE6 in C3.

For example, BS3 may determine that the value to be used as timing advance of the user equipment in C3 is equal to a value used for UE6 in C3 (for example, the value used for UE6 in C3 during the handover of UE6 from C2 to C3).

BS3 may also determine the value to be used as timing advance of the user equipment (UE2) in C3 based on values used for several user equipments connected to BS3.

For example, BS3 may determine that the value to be used as timing advance of the user equipment (UE2) in C3 is equal to the average of several user equipments' values used in C3 (for example, the values used for several user equipments in C3 during their handover from C2 to C3). For example, BS3 may determine that the value to be used as timing advance of the user equipment (UE2) in C3 is a value of the function of variation of timing advance in C3 of another user equipment (for example, UE6), or an average of values of functions of several user equipments.

In addition, the values, based on which the value to be used as timing advance of the user equipment (UE2) in C3 is determined, may be used to determine the value of UE2 for a certain amount of time. For this, a time stamp is associated to each value, this time stamp corresponds to the moment of the determination of each of these values. The value for which the time stamp indicates that the moment of determination of this value is older than a time threshold cannot be used to determine the value to be used as timing advance of the user equipment (UE2) in C3. That is, only sufficiently recent values are used for the estimation.

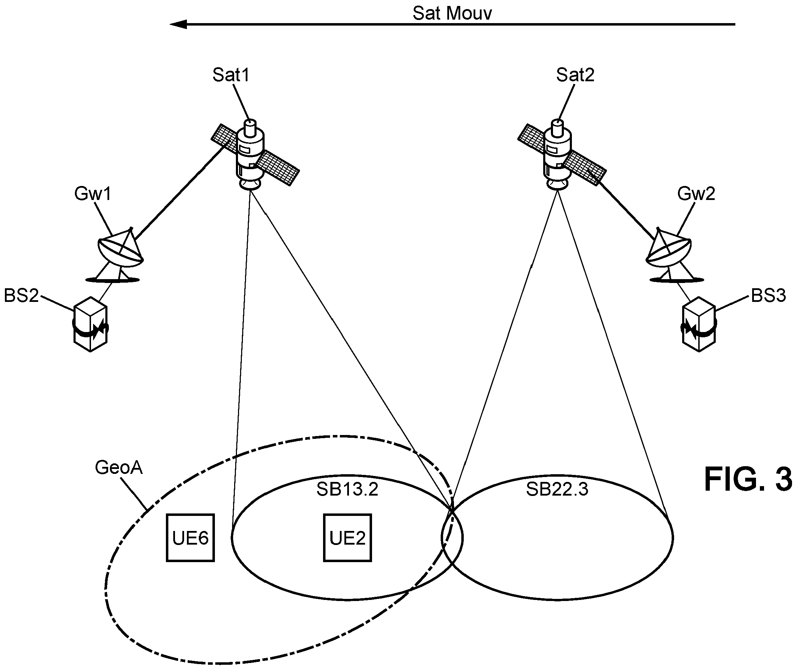

Figure 3 represents the same satellite communication network as the one represented in figure 1. A user equipment UE6 (also referred in the application as the another user equipment) has been added. UE6 was connected to BS3 during a previous passage of Sat1 and Sat2 (for example when the satellites follow fixed orbits), for example after having performed a handover from BS2 to BS3. Since UE6 was connected to BS3, BS3 knows the value of the timing advance of UE6 used when UE6 was connected to BS3. The value of the timing advance of UE6 used when UE6 was connected to BS3 may have been determined by BS3 by any method (existing method or method according to the invention). When UE6 was connected to BS3, the geographical coverage of C3 intersected with a geographical area GeoA. The value of the timing advance of UE6 (for example, the value used for UE6 in C3 during the handover of UE6 from C2 to C3) is associated with the geographical area GeoA. UE2 is connected to BS2 and will have to perform a handover from BS2 (first base station) to BS3 (second base station). BS3 may determine the value to be used as timing advance of the user equipment in C3 based on the value used for UE6 in C3 if the geographical coverage of C3 intersects with the geographical area GeoA when UE2 performs the handover from BS2 to BS3. This implementation may also be implemented in combination with the time stamp.

These implementations (represented in figures 2 and 3) involve the second base station (BS3) which may determine the value to be used as a timing advance in the second cell for UE2. However, in these implementations, the BS2 may also determine the value to be used as a timing advance in the second cell for UE2. In this case, BS3 sends to BS2 the information needed, for example, the values used as timing advance in C3 by the user equipments connected to BS3, enabling for example BS2 to compute an average of the values used as timing advance in C3, which may be considered as the value to be used as timing advance in C2 for UE2.

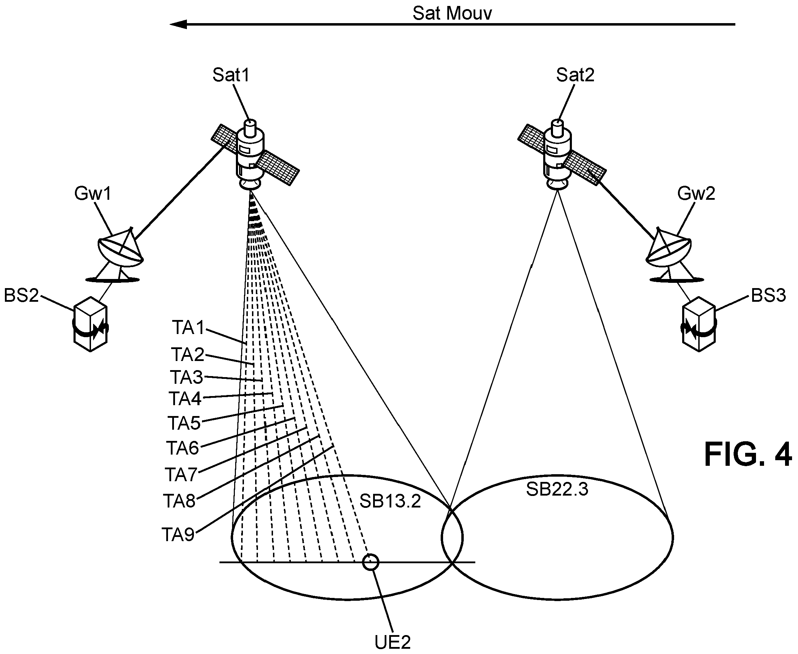

Figure 4 represents the same satellite communication network as the one represented in figure 1.

UE2 is connected to BS2. During its connection to BS2, BS2 tracks the timing advance of UE2 to continuously update the value to be used as timing advance in C2 for UE2. In figure 4, TA1 to TA9 represent the timing advance values measured for UE2 by BS2. In figure 4, these values are represented in the frame of the satellite. These values (TA1 to TA9) of the timing advance of UE2 measured in C2 respectively associated with their moments of measuring (that is, a function of the evolution of timing advance value in the first cell) may enable BS2 (or BS3 if this information is transmitted to BS3) to have some information on the position of UE2 and/or to predict the evolution of the timing advance values of UE2 at ulterior moments.

This position may be computed with equivalent technics. For example, the average timing advance value experience in C2 enables to determine the axis parallel to the movement direction of Sat1. Crossing the axis on which UE2 is with two of the circles drawn by two different timing advance values of UE2 measured by BS1 enables to obtain the position of UE2.

In another example, it is possible to deduce more precisely the position of UE2 based on the timing advance value experience in C2 (TA-C2) at a given time instant, for example at $t_1$ milliseconds second after the handover. The variation of the timing advance value experience in C2, possibly combined with other measurements, gives information related to the position of UE2 and/or to allow predict the evolution of the timing advance values of UE2 at ulterior moments in the same or in the following cell.

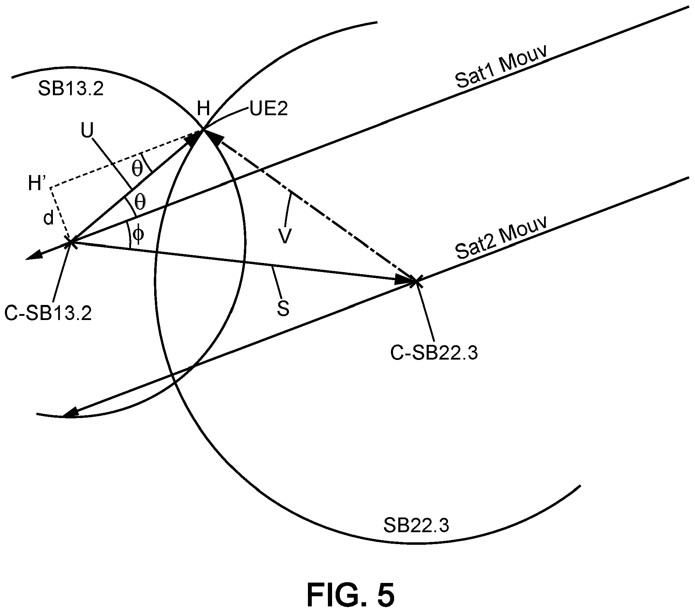

For example, in the particular case where the center of the beam footprint used to communicate with UE2 corresponds to the nadir point of Sat1 (that is, the center corresponds to the point on Earth's surface directly below the satellite), a minimum value of abs(timing advance - TA_ref) indicates that UE2 reached, on its trajectory, the closes point to the center of the beam (SB13.2), where abs(.) denotes the absolute value and TA ref is a reference timing advance value, which may be beam specific (commonly known by all users in the beam), which corresponds to the timing advance of a user at the center of the beam. In this case two positions of UE2 are possible (the same minimum value is reached in both points H' as depicted on figure 5 and its symmetric with respect to the axis Sat1 Mouv). In this case further information may be required to distinguish in which of the two positions UE2 actually is, for example, using the Reference signal Receive Power (RSRP) of UE2 measured by another satellite of the constellation, or using previous statistics on UE2's trajectory received from other base stations.

In some implementations, TA_ref may for example be broadcasted to all users in the beam (e.g. through SIB or through an RRC parameter having a common value for all users in the beam). In this case, only a differential value of timing advance, UE-specific, is transferred to each UE during its communication with a base station through a given beam, and the UE can compute the timing advance value by combining the reference beam-specific value TA ref and the UE-specific value transferred separately by the serving base station.

To complete the determination of the value to be used as timing advance for UE2 in C3, additional information relative to the topology of the satellite constellation may be required. For example, the position of the nadir point of Sat2 relatively to the nadir point of Sat1 and the altitude of Sat1 and Sat2. These additional information may be given by the ephemeris of the satellite constellation (or at least the ephemeris of Sat1 and Sat2) or by a map of the beams footprint of the satellite network or any other classical method used to determine the value to be used in the second cell when the position of the user equipment is known (for example, using the same methods that are used to determine the timing advance value when the user equipment has its position through a global navigation satellite system).

In addition, this additional information may include information relative to the physical location of the base station (BS2 and/or BS3) and/or the timing advance offset induced by the transmission between the base station (BS2 and/or BS2) and the satellite (Sat1 and/or Sat2) when the base station is not located on board this satellite. Therefore, the first base station (BS2) may adjust consequently the determination of the value to be used as timing advance in C3.

Information relative to this position may be transmitted to BS3 to enable BS3 to determine the value to be used as timing advance in C3 for UE2 or BS3 may transmit to BS2 additional information if needed to enable BS2 to complete the determination of the value of timing advance. We will see in the following what type and form of information may be transmitted.

Referring to figure 5 it is shown in more detail the determination of the value to be used as timing advance of the user equipment in the second cell according to the method described in figure 4. Figure 5 represents a view from above of the same satellite communication network as the one represented in figure 4. For the sake of simplicity, in the example of figure 5 the centers of the beams (C-SB13.2 and C-SB22.3) respectively coincide with the nadir points of Sat1 and Sat2.

The position of C-SB22.3 relatively to C-SB13.2, represented by vector $\vec{S}$, and the angle φ can be known from constellation topology.

BS2 measures the timing advance of UE2 used in C2. UE2 can be located at any point of the circle with the center at the beam center (C-SB13.2) and of radius $\|\vec{U}\|$ (corresponding to the TA-C2 value of UE2). When connecting to BS3 at point H, UE2 should use a TA-C3 value corresponding to $\|\vec{V}\|$.

In order to compute $\|\vec{V}\|$, the angle θ should be known. SB2 estimates TA-C2 value as the satellite moves in the direction $\vec{D}$. The minimum absolute value of the TA-C2 values is observed when UE2 is at the closest from C-SB13.2, that is, when UE2 is at position H', with TA-C2 value corresponding to *d.* Based on *d* and $\|\vec{U}\|$, it is possible to compute θ as

$$\theta = \sin^{-1}\frac{d}{\|\vec{U}\|},$$

Therefore, $\|\vec{V}\|$ can be computed as:

$$\left\|\vec{V}\right\|^{2} = \left\|\vec{U} - \vec{S}\right\|^{2} = \left\|\vec{S}\right\|^{2} + \left\|\vec{U}\right\|^{2} - 2\left\|\vec{S}\right\|^{2}\left\|\vec{U}\right\|^{2}\cos(\theta + \phi)$$

A UE having its position through a global navigation satellite system may not be able of computing itself its own timing advance, due to limitations in its computing capability, or due to lack of knowledge on the network topology, and still needs assistance information from the network in order to correctly know the timing advance value in the target cell. In this case, the method given by the invention still applies, with a supplementary step where the UE reports its location information to the network (e.g. to the source base station before and/or during handover, to the target base station during and/or after handover). In this case, the network receives from the UE the location information and matches it to a timing advance value, without needing to perform all the computations as here-above. Thus, determination of the timing advance by a network entity is simplified.

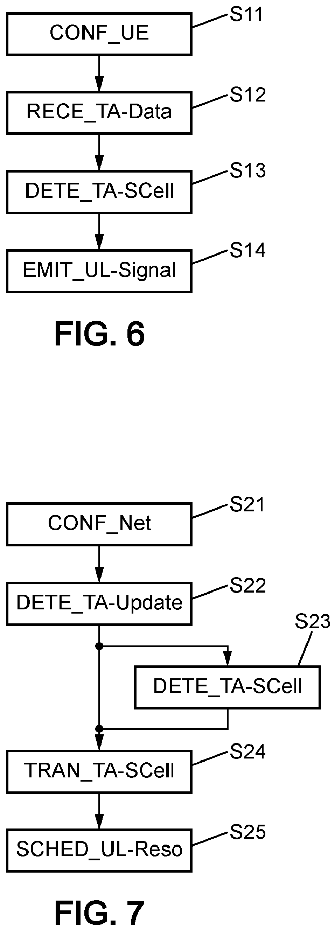

Referring to figure 6 it is shown a flowchart representing the steps implemented by the user equipment to perform a handover according to the invention.

At step S11 the user equipment (for example UE2) is configured.

The steps of the method implemented by the user equipment will be described in the general context and illustrated in the context of UE2, however, the person skilled in the art, based on the above description, will find no difficulty to transpose the specific illustration to the situations of the other user equipments described above (UE1 to UE5).

The configuration of the user equipment UE2 may be done when connecting to a base station of the satellite network (the first time the user equipment connects to a base station of the network or each time the user equipment performs an initial connection to the network or during the connection of the user equipment to the network), or while being connected to a base station (for example through configurations and/or reconfiguration messages) or may be done as factory settings.

The configuration of UE2 may comprise setting the handover mode which will be implemented during UE2 is connected to the satellite network or until the current configuration is changed by the network. For example, the mode may be a standard mode (StaM), implementing handovers as described in the NR standard. The mode may be a simple mode (SimM), implementing handovers as described in the NR standard only when the value to be used as timing advance in the second cell is different from the value used as timing advance in the first cell. The mode may be a full mode (FulM), implementing only handovers according to the invention.

The configuration may also set some parameter that will be necessary for the user equipment UE2 to retrieve the value to be used as a timing advance in the second cell C3. For example:

- A network generic value, that is, timing advance in the network is expressed as the sum of a network generic value and of an offset value;
- A satellite generic value, that is, timing advance related to base stations supported by a satellite is expressed as the sum of a satellite generic value specific to that satellite and of an offset value;
- A base station generic value, that is, timing advance related to a base station is expressed as the sum of a base station generic value specific to that base station and of an offset value;
- A beam generic value, that is, timing advance related to a base station transmitting through a beam is expressed as the sum of a beam generic value specific to that beam and of an offset value.

At step S12 the user equipment UE2 receives a data related to timing advance of the user equipment in the second cell. This data may be transmitted to UE2 by the first base station BS2 or by a base station to which the user equipment has been connected before being connected to BS2, for example BS1. To receive such data the handover mode is set to either the SimM mode or the FulM mode.

In SimM mode the data related to timing advance of the user equipment in the second cell is either:

- data informing the user equipment that the value to be used as a timing advance of UE2 in C3 (referred to as TA-C3 to be used) is different from the TA-C2 (for example, setting a binary value to 1); or
- data informing the user equipment that the TA-C3 to be used is the same as the TA-C2 (for example, setting a binary value to 0).

The transmission to UE2 of one of these data may be avoided by configuring UE2 and the network. For example, the network and UE2 are configured such as:

- data informing the user equipment UE2 that the TA-C3 to be used is different from the TA-C2 is still transmitted to UE2, the next handover being performed according to this information;
- data informing the user equipment that the TA-C3 to be used is the same as the TA-C2 is not transmitted to UE2, when performing the handover from C2 to C3, UE2 (which is set in SimM mode) will assume that the TA-C3 to be used is the same as the TA-C2 and therefore will perform the handover as if it received this information.

The contrary is also possible, that is, data informing the user equipment that the TA-C3 to be used is different from the TA-C2 is not transmitted to UE2 and data informing the user equipment that the TA-C3 to be used is the same as the TA-C2 is transmitted to UE2.

Depending on the ratio of cells supported per satellite one or the other option is more advantageous regarding the signaling.

In FulM mode the data related to timing advance of the user equipment in the second cell is either:

- data informing the user equipment that the TA-C3 to be used is the same as the TA-C2;
- data related to a TA-C3 to be used.

As in the SimM mode, the transmission to UE2 of data informing the user equipment that the TA-C3 to be used is the same as the TA-C2 may not be transmitted if UE2 and the network are configuring that way. In that case, when performing the next handover, if no data related to a TA-C3 to be used is received by UE2, UE2 (which is set in FulM mode) will assume that the TA-C3 to be used is the same as the TA-C2 and perform the handover as if it received this information.

The data related to a TA-C3 to be used may comprise:

- data corresponding to the TA-C3 to be used, for example, UE2 may receive the TA-C3, or any encoded version representing TA-C3;
- data corresponding to an offset from TA-C2;
- data corresponding to an offset from a generic value (network generic value, satellite generic value, base station generic value, beam generic value).

At step S13 the user equipment UE2 determines the TA-C3 to be used.

If UE2 received data related to a TA-C3, based on this data and the data stored during the configuration or the TA-C2, UE2 determines the TA-C3. For example, UE2 sums the offset with a generic value to retrieve TA-C3. For example, UE2 decodes data corresponding to the TA-C3.

If UE2 received data informing that the TA-C3 to be used is the same as the TA-C2, then UE2 may set TA-C3 as equal to TA-C2. For example, the last TA-C2 used by UE2 in C2. When TA-C2 and/or TA-C3 are composed of a user-specific and a generic value, the repartition between the user-specific value and the generic value might change during handover, even if TA-C3 is the same as TA-C2.

If UE2 received data informing that the TA-C3 to be used is different than the TA-C2, then UE2 may not set a value for TA-C3 and prepare to perform a standard handover.

As previously mentioned, UE2 may also set TA-C3 as equal to TA-C2, when not receiving any data related to a TA-C3, if the network and UE2 are configured such as, when no data related to the TA-C3 is transmitted to UE2, UE2 assumes that the TA-C3 to be used is the same as the TA-C2.

At step S14, UE2 performs a handover from C2 to C3.

If no TA-C3 is determined at step S13, UE2 performs a standard handover.

If UE2 determines a TA-C3 at step S13, then UE2 may perform an uplink transmission with BS3 using TA-C3. That is, UE2 applies a time offset based on TA-C3 to compensate the time required for the signal to propagate.

This uplink transmission may be an uplink transmission as part of a RACH procedure.

For example, this uplink transmission may be the first uplink transmission performed with BS3 during random access (RACH) procedure. For example, the first message of the RACH procedure is sent by UE2 to connect to BS3 using a TA-C3 offset.

For example, this uplink transmission may be the second uplink transmission performed with BS3 during RACH. For example, in the context of NR, the third message of the RACH procedure is sent by UE2 to connect to BS3 using a TA-C3 offset. Therefore, the first message of the RACH procedure is sent according to the standard procedure enabling BS3 to estimate TA-C3 without receiving signaling data corresponding to it.

Thjs uplink transmission may be an uplink transmission following a RACH-less handover procedure and thus represent a first/second/ulterior regular uplink transmission to BS3, before BS3 updates the value of the timing advance (e.g. through timing advance adjustment in connected mode like for example BS3 transmitting MAC CE timing advance command to UE3 in current NR procedures)

In these cases UE2 will not receive any TA-C3 from BS3 until connection is performed. Once the connection to BS3 established, BS3 may update TA-C3 continuously until UE2 leaves C3.

Referring to figure 7 it is shown a flowchart representing the steps implemented by the satellite network to manage a handover according to the invention.

At step S21 the satellite communication network is configured.

The configuration of the satellite communication networks comprises setting the handover modes that the network can implement and configuring the method of determination of the value to be used as timing advance of the user equipment in the second cell. Based on the method, the data required to determine such values is stored on different network entities.

Therefore, on each base station (or more generally any other network entities except a user equipment) of the satellite communication network is stored at least part of the information which is:

- the ephemeris of the satellite constellation; and/or
- beam topology, that is the distribution of the beams' footprint on the earth surface; and/or
- the mapping between the base stations and the satellites on which they are on board; and/or
- the mapping between the base stations that are on earth and the gateways through which they link to the satellites; and/or
- the physical positions of the gateways through which base stations link to satellites; and/or
- the physical positions of the base stations relatively to each other (co-localized or not).

Depending on the method configured for determination of the value to be used as timing advance of the user equipment in the second cell, the network entities involved store data relevant to determine such value.

- a value used as a timing advance in the second cell for another user equipment;
- a time stamp associated with this value;
- information relative to a geographical area;
- functions of the evolution of timing advance value of the user equipment in a cell
- mapping between functions of the evolution of timing advance value of the user equipment in the first cell and positions of the user equipments;
- mapping between minimum timing advance values of the user equipment in the first cell and/or the second cell and positions of user equipments and/or RSRP and/or Doppler measurements;
- mapping between timing advance values experience in the first cell at a given time instant and positions of user equipments and/or RSRP and/or Doppler measurements;
- mapping between functions of evolution of timing advance values of the user equipment in the first cell and functions of evolution of timing advance values of the user equipment in the second cell;
- the ephemeris of the satellite constellation;
- information on the beams footprint of the satellite network (for example, a map of the beams footprint of the satellite network);
- etc.

At step S22 a network entity determines if the value to be used as timing advance of the user equipment in the second cell (that is, TA-C3 to be used for UE2 in the context of UE2) is the same or not as the value used as timing advance of the user equipment in the first cell (that is, TA-C2).

The steps of the method implemented on the network side (any network entities except the user equipments) will be described in the general context and illustrated in the context of UE2, however, the person skilled in the art, based on the above description, will find no difficulty to transpose the illustration to the situations of the other user equipments described above (UE1 to UE5).

The network entity determines if the first cell and the second cell are supported by the same satellite and if the first base station and the second base station are co-localized. The network entity determines this based on the configuration and the information stored at step S21. This information may not be accessible to the network entity directly and may require receiving part of the information from other network entities for instance through the operation and maintenance configuration (O&M) and/or through inter-base stations exchanges (Xn links).

In the case of UE2, UE2 is connected to BS2 and will have to perform a handover from BS2 to BS3. The network entity determines that BS3 and BS2 are not co-localized and that C3 and C2 are supported by different satellites (respectively Sat2 and Sat1) and therefore that the TA-C3 to be used is different than TA-C2, as previously mentioned in figure 1.

The network entity may be BS2 or BS3.

The other cases are described in figure 1.

If, at step S22 the network entity determined that the value to be used as timing advance of the user equipment UE2 in the second cell C3 (that is, TA-C3 to be used for UE2) is different than the value used as timing advance of the user equipment UE2 in the first cell C2 (that is, TA-C2), then at step S23, the network entity determines the value to be used as timing advance of the user equipment UE2 in the second cell C3.

To determine the value to be used as timing advance of the user equipment UE2 in the second cell C3, the network entity may implement one or several methods described in figures 2, 3 and 4. These methods may be combined together to obtain more precision in the determination of the value to be used as timing advance of the user equipment UE2 in the second cell C3 (TA-C3 to be used).

The methods described in figures 2 and 3 describe determining the value from learning by the second base station (BS3 in the context of UE2) the timing advance values of the other user equipment. The network entity implementing the determination of TA-C3 to be used may be BS2 or BS3 (or any network entities except the user equipments). However, if BS2 is the network entity which determines the TA-C3 to be used for UE2, BS3 may transmit the values learned (or any corresponding information) based on which the TA-C3 may be determined to BS2. This transmission may be performed through inter-base stations exchanges (Xn links).

The method described in figure 4 describes determining the value from computation based on user equipment specific parameters related to the position of the user equipment acquired by the first base station (BS2 in the context of UE2). The network entity implementing the determination of TA-C3 to be used may be BS2 or BS3 (any network entities except the user equipments). However, if BS3 is the network entity which determines the TA-C3 to be used for UE2, BS2 may transmit the position of the user equipment UE2 (or any corresponding information) based on which the TA-C3 may be determined by BS3. On the contrary, if BS2 is the network entity which determines the TA-C3 to be used for UE2, BS3 may transmit the additional information (as described above) of the user equipment UE2 (or any corresponding information) based on which the TA-C3 may be determined by BS2. In both cases, these transmissions may be performed through inter-base stations exchanges (Xn links).

At step S24 the network entity which determined the value to be used in the second cell for the user equipment, transmit, if necessary, data related to timing advance of the user equipment in the second cell to the second base station to which the user equipment will connect and to the user equipment (especially if the user equipment cannot determine by its own the value to be used in the second cell) eventually via other base stations.

Therefore, if the network entity which determined the value is the second base station (BS3 in the context of UE2) and if the TA-C3 to be used is different from the TA-C2 and if the handover mode is the FulM, the second base station (BS3) may transmit a data related to timing advance of the user equipment in the second cell to the first base station (BS2), to enable the first base station to transmit data related to timing advance of the user equipment in the second cell to the user equipment (UE2).

The data related to timing advance of the user equipment in the second cell sent by the first base station may comprise:

- data corresponding to the TA-C3 to be used, for example, BS2 may send the TA-C3, or any encoded version representing TA-C3;
- data corresponding to an offset from TA-C2;
- data corresponding to an offset from a generic value.

The user equipment, based on the data related to timing advance received from the first base station, determines the timing advance value to be used in the second cell (TA-C3).

If the TA-C3 to be used is different from the TA-C2 and if the handover mode is the SimM, the second base station (BS3) may transmit a data related to timing advance of the user equipment in the second cell to the first base station (BS2), to enable the first base station to transmit data related to timing advance of the user equipment in the second cell to the user equipment (UE2). In this case, the data related to timing advance of the user equipment may be data informing the user equipment that the timing advance value will have to be updated. Since the handover mode is SimM, the user equipment UE2 will perform a standard handover between BS2 and BS3 during which UE2 will acquire a TA-C3 to be used.

If the value to be used as timing advance of the user equipment in the second cell is the same as the value used as timing advance of the user equipment in the first cell (which is the case for UE1) and if the handover mode is the FulM or in SimM, the second base station (BS2 in the context of UE1) may transmit a data related to timing advance of the user equipment in the second cell to the first base station (BS1 in the context of UE1).

The first base station, depending on the configuration, transmits or not data related to timing advance of the user equipment in the second cell to the user equipment. However, in both cases the user equipment, based on the data related to timing advance in the second cell received from the first base station or based on the fact that the user equipment did not receive any data related to timing advance in the second cell, sets the timing advance value to be used in the second cell C2 as for example the last timing advance value used in the first cell C1.

As previously mentioned data related to timing advance of the user equipment in the second cell sent by the first base station to the user equipment (which enables the user equipment to determine the value to be used in the second cell) may differ or not from the data related to timing advance of the user equipment in the second cell sent by the second base station to the first base station (which enables the first base station to produce the data related to timing advance of the user equipment in the second cell sent to the user equipment).

If the network entity which determined the value is the first base station (BS2 in the context of UE2) and if the TA-C3 to be used is different from the TA-C2 and if the handover mode is the FulM, the first base station (BS2) may transmit a data related to timing advance of the user equipment in the second cell directly to the user equipment (UE2). In addition, the first base station (BS2) may transmit the data related to timing advance of the user equipment in the second cell directly to the user equipment (UE2).

The data related to timing advance of the user equipment in the second cell sent by the first base station may comprise:

- data corresponding to the TA-C3 to be used, for example, BS2 may send the TA-C3, or any encoded version representing TA-C3;
- data corresponding to an offset from TA-C2;
- data corresponding to an offset from a generic value.

The user equipment, based on the data related to timing advance received from the first base station, determines the timing advance value to be used in the second cell (TA-C3).

The second base station, based on the data related to timing advance received from the first base station, determines the timing advance value to be used in the second cell (TA-C3).

If the TA-C3 to be used is different from the TA-C2 and if the handover mode is the SimM, the first base station (BS2) may transmit a data related to timing advance of the user equipment in the second cell directly to the user equipment (UE2). In this case, the data related to timing advance of the user equipment may be data informing the user equipment that the timing advance value will have to be updated. Since the handover mode is SimM, the user equipment UE2 will perform a standard handover between BS2 and BS3 during which UE2 will acquire a TA-C3 to be used.

In addition, the first base station (BS2) may transmit data related to timing advance of the user equipment in the second cell to the second base station (BS3). The second base station, based on the data related to timing advance received from the first base station, determines that the timing advance value will be updated by performing a standard handover during which UE2 will acquire a TA-C3 to be used.

If the value to be used as timing advance of the user equipment in the second cell is the same as the value used as timing advance of the user equipment in the first cell (which is the case for UE1) and if the handover mode is the FulM or the SimM, the first base station (BS1 in the context of UE1) may, depending on the configuration, transmit or not data related to timing advance of the user equipment in the second cell to the user equipment. However, in both cases the user equipment, based on the data related to timing advance in the second cell received from the first base station BS1 or based on the fact that the user equipment UE1 did not receive any data related to timing advance in the second cell, sets the timing advance value to be used in the second cell C2 as for example the last timing advance value used in the first cell C1.

In addition, the first base station BS1 may transmit data related to timing advance of the user equipment in the second cell to the second base station (BS2 in the context of UE1).

The second base station, based on the data related to timing advance received from the first base station, determines the value to be used as timing advance of the user equipment in the second cell.

As previously mentioned data related to timing advance of the user equipment in the second cell sent by the first base station to the user equipment (which enables the user equipment to determine the value to be used in the second cell) may differ or not from the data related to timing advance of the user equipment in the second cell sent by the first base station to the second base station (which enables the second base station to determine the value to be used in the second cell).

At step S25 the first and second base station perform the handover of the user equipment from the first base station to the second base station.

If the mode is the SimM and if the data related to timing advance of the user equipment UE2 in the second cell does not enable to determine the value to be used TA-C3, the handover performed from the first base station to the second base station is a standard handover.

If the mode is:

- the FulM, or
- SimM and that no data related to timing advance of the user equipment in the second cell is sent to UE1 or the data related to timing advance sent is data informing the user equipment that the value to be used as a timing advance of the user equipment in the second cell is the same as the value used as a timing advance of the user equipment in the first cell,

then, a handover according to the invention is performed from the first base station to the second base station, that is, a handover during which the second base station does not transmit a value to be used as a timing advance value of the user equipment in the second cell to the user equipment. For example, in the context of NR the second message of the RACH procedure sent by the second base station to connect to it will not include the timing advance value. Once the connection to the second base station is established, the second base station may update the timing advance value continuously until the user equipment leaves the second cell.

In addition, the second base station may schedule uplink resources to the user equipment using the determined timing advance value. For example, in the context of NR the second message of the RACH procedure sent by the second base station will schedule uplink resources to the user equipment to enable the user equipment to send the third message of the RACH procedure. This is possible (since the second base station knows the timing advance value to be used) even though the second base station received a first message of the RACH procedure from the user equipment which may have already been compensated based on the timing advance value and therefore no estimation of the timing advance is performed based on this first message of the RACH procedure.

**Claims**

1. A method implemented by a user equipment for performing a handover between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

   determining a value to be used as a timing advance in the second cell, the value to be used as a timing advance in the second cell being determined based on:

   - a data related to timing advance of the user equipment in the second cell received from the first base station or from a base station to which the user equipment has been connected before being connected to the first base station, or
   - a value used as a timing advance in the first cell when no data related to timing advance of the user equipment in the second cell is received from the first base station or from a base station to which the user equipment has been connected before being connected to the first base station ;

   performing an uplink transmission with the second base station using the value to be used as a timing advance in the second cell.

2. The method according to claim 1, wherein data related to timing advance of the user equipment in the second cell comprises at least one among:

   - data related to a value to be used as a timing advance of the user equipment in the second cell;
   - data informing the user equipment that the value to be used as a timing advance of the user equipment in the second cell is different from the value used as a timing advance of the user equipment in the first cell; and
   - data informing the user equipment that the value to be used as a timing advance of the user equipment in the second cell is the same as a value used as a timing advance of the user equipment in the first cell.

**3.** The method according to claim 2, wherein data related to a value to be used as a timing advance of the user equipment in the second cell comprises at least one among:

- data corresponding to a value,
- data corresponding to an offset from a value used as a timing advance of the user equipment in the first cell;
- data corresponding to an offset from a generic value.

**4.** Method according to any one of the precedent claims, wherein the uplink transmission performed with the second base station is a first uplink transmission performed with the second base station.

**5.** A user equipment configured to perform a handover procedure between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the user equipment comprising:

a processor; and
a non-transitory computer-readable medium comprising instructions stored thereon, which when executed by the processor configure the user equipment to:

determine a value to be used as a timing advance in the second cell, the value to be used as a timing advance in the second cell being determined based on:

- a data related to timing advance of the user equipment in the second cell received from the first base station or from a base station to which the user equipment has been connected before being connected to the first base station, or
- a value used as a timing advance in the first cell when no data related to timing advance of the user equipment in the second cell is received from the first base station or from a base station to which the user equipment has been connected before being connected to the first base station ;

perform an uplink transmission with the second base station using the value to be used as a timing advance in the second cell.

**6.** Method for managing a handover of a user equipment between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining, before the second base station receives any signal from the user equipment, a value to be used as a timing advance of the user equipment in the second cell;
performing an uplink transmission between the second base station and the user equipment using the value to be used as a timing advance of the user equipment in the second cell.

**7.** Method according to claim 6, wherein when the first cell and the second cell are supported by the same satellite and the first base station and the second base station are co-localized, the determined value is the same as a value used as a timing advance of the user equipment in the first cell.

**8.** Method according to claims 6 or 7, wherein the value to be used as a timing advance of the user equipment in the second cell is determined based on at least one value used or previously used as a timing advance of another user equipment in the second cell.

**9.** Method according to claim 8, wherein the at least one value used or previously used as a timing advance of the another user equipment in the second cell is used or previously used as a timing advance of the another user equipment in the second cell for:

- a first uplink transmission of the another user equipment once connected to the second cell, or
- an uplink transmission between the another user equipment and the second base station before being connected to the second cell.

10. Method according to claim 8 or 9, wherein the at least one value is associated with a time stamp, said time stamp corresponding to a moment of a determination of the at least one value, and wherein a time duration between the moment of the determination of the at least one value and the determination of the value to be used as a timing advance of the user equipment in the second cell is under a predetermined threshold.

11. Method according to claim 8 or 9, wherein the at least one value is associated with a geographical area such that, at the moment of a determination of the at least one value said geographical area intersects a geographical coverage of the second cell, and when performing the uplink transmission between the second base station and the user equipment, said geographical area intersects a geographical coverage of the second cell.

12. Method according to any one of claims 6 to 11, wherein the value to be used as a timing advance of the user equipment in the second cell is determined by the second base station.

13. Method according to claim 12 further comprising transmitting by the second base station to the first base station or to a base station to which the user equipment is or will be connected before being connected to the first base station, data related to timing advance of the user equipment in the second cell, said data related to timing advance of the user equipment in the second cell corresponds to the value to be used as a timing advance of the user equipment in the second cell determined by the second base station.

14. Method according to any one of claims 6 to 11, wherein the value to be used as a timing advance of the user equipment in the second cell is determined based on at least a value used as a timing advance of the user equipment in the first cell.

15. Method according to claim 14, wherein the value to be used as a timing advance of the user equipment in the second cell is determined based on at least:

- a minimum value used as a timing advance of the user equipment in the first cell, and/or
- a position of a center of a second beam footprint relatively to a position of a center of a first beam footprint, the first beam being used by the first base station for communicating with the user equipment and the second beam being used by the second base station for performing the uplink transmission between the second base station and the user equipment; and/or
- a position of a geographical coverage of the first cell, and/or
- a position of a geographical coverage of the second cell, and/or
- an evolution of the value used as a timing advance of the user equipment in the first cell; and/or
- a value used as a timing advance of the user equipment in the first cell determined at a given time after the user equipment performed a handover to connect to the first base station or at a given time before the user equipment performes a handover to connect to the second base station; and/or
- a satellite moving direction.

16. Method according to any one of claims 14 to 15, wherein the value to be used as a timing advance of the user equipment in the second cell is determined by the first base station based on information provided by the second base station.

17. Method according to any one of claims 6 to 16 further comprises transmitting to the user equipment from the first base station or from a base station to which the user equipment has been connected before being connected to the first base station, data related to timing advance of the user equipment in the second cell corresponding on the value determined.

18. A second base station configured for managing a handover of a user equipment between a first cell and a second cell in a network comprising a satellite communication network, the first cell and the second cell being supported by one or more satellites of the satellite communication network, the first cell corresponding to a first base station and the second cell corresponding to the second base station, at least the first cell being supported by a non-geostationary orbit satellite of the satellite communication network, the second base station comprising:

a processor; and
a non-transitory computer-readable medium comprising instructions stored thereon, which when executed by the processor configure the second base station to:

- determine a value to be used as a timing advance of the user equipment in the second cell;
- perform an uplink transmission between the second base station and the user equipment using the value to be used as a timing advance of the user equipment in the second cell.

19. Method for managing a handover of a user equipment between a first cell and a second cell in a network comprising a satellite communication network, the first cell and the second cell being supported by one or more satellites of the satellite communication network, the first cell corresponding to a first base station and the second cell corresponding to a second base station, at least the first cell being supported by a non-geostationary orbit satellite of the satellite communication network, the method comprising:

determining a value to be used as a timing advance of the user equipment in the second cell;
transmitting to the second base station and/or the user equipment, before the second base station receives any signal from the user equipment, the value to be used as a timing advance of the user equipment in the second cell.

20. A first base station configured for managing a handover of a user equipment between a first cell and a second cell in a network comprising a satellite communication network, the first cell and the second cell being supported by one or more satellites of the satellite communication network, the first cell corresponding to the first base station and the second cell corresponding to a second base station, at least the first cell being supported by a non-geostationary orbit satellite of the satellite communication network, the first base station comprising:

a processor; and
a non-transitory computer-readable medium comprising instructions stored thereon, which when executed by the processor configure the second base station to:

- determine a value to be used as a timing advance of the user equipment in the second cell;
- transmit to the second base station and/or the user equipment, before the second base station receives any signal from the user equipment, the value to be used as a timing advance of the user equipment in the second cell.

21. A non-transitory computer-readable medium comprising instructions stored thereon, which when executed by a processor perform the method according to any one of claims 1 to 4, 6 to 17 and 19.

**FIG. 1**

EP 3 866 521 A1

Sat Mouv

Sat1

Sat2

Gw1

Gw2

BS2

BS3

SB13.2

SB22.3

UE2

UE6

FIG. 2

Sat1

Sat2

Gw1

Gw2

BS2

BS3

GeoA

SB13.2

SB22.3

UE6

UE2

FIG. 3

EP 3 866 521 A1

EP 3 866 521 A1

Sat Mouv

Sat1

Sat2

Gw1

Gw2

BS2

BS3

TA1
TA2
TA3
TA4
TA5
TA6
TA7
TA8
TA9

SB13.2

SB22.3

**FIG. 4**

UE2

FIG. 5

CONF_UE — S11

↓

RECE_TA-Data — S12

↓

DETE_TA-SCell — S13

↓

EMIT_UL-Signal — S14

## FIG. 6

CONF_Net — S21

↓

DETE_TA-Update — S22

DETE_TA-SCell — S23

↓

TRAN_TA-SCell — S24

↓

SCHED_UL-Reso — S25

## FIG. 7

Europäisches
Patentamt
European
Patent Office
Office européen
des brevets

# EUROPEAN SEARCH REPORT

Application Number

EP 20 30 5148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2018/020472 A1 (LIN MU RONG [US] ET AL)<br>18 January 2018 (2018-01-18)<br>* figure 6 *<br>* paragraph [0042] *<br>* paragraph [0044] *<br>----- | 1-6,12,<br>13,17-21<br>7-11,<br>14-16 | INV.<br>H04W56/00<br>H04B7/185 |
| X<br>A | WO 2015/127987 A1 (NOKIA SOLUTIONS & NETWORKS OY [FI])<br>3 September 2015 (2015-09-03)<br>* figure 10 *<br>* paragraph [0120] - paragraph [0122] *<br>----- | 1-6,<br>12-15,<br>17-21<br>7-11,16 | |
| A | EP 0 749 218 A1 (ALCATEL NV [NL])<br>18 December 1996 (1996-12-18)<br>* figure 1 *<br>* page 1, line 1 - line 14 *<br>* page 1, line 34 - line 50 *<br>----- | 1-21 | |

TECHNICAL FIELDS
SEARCHED (IPC)

H04W
H04B

The present search report has been drawn up for all claims

| Place of search | Date of completion of the search | Examiner |
|---|---|---|
| The Hague | 13 August 2020 | Akhertouz Moreno, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5148

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2020

| Patent document cited in search report | | Publication date | Patent family member(s) | | Publication date |
|---|---|---|---|---|---|
| US 2018020472 | A1 | 18-01-2018 | NONE | | |
| WO 2015127987 | A1 | 03-09-2015 | US | 2017041841 A1 | 09-02-2017 |
| | | | US | 2019021031 A1 | 17-01-2019 |
| | | | WO | 2015127987 A1 | 03-09-2015 |
| EP 0749218 | A1 | 18-12-1996 | DE | 69605980 T2 | 03-08-2000 |
| | | | EP | 0749218 A1 | 18-12-1996 |
| | | | FR | 2735302 A1 | 13-12-1996 |
| | | | JP | H098720 A | 10-01-1997 |
| | | | US | 6128488 A | 03-10-2000 |

EPO FORM P0459

For more details about this annex : see Official Journal of the European Patent Office, No. 12/82